Europäisches Patentamt

European Patent Office

Office européen des brevets

(19)

(11) EP 0 886 725 B1

(12) EUROPÄISCHE PATENTSCHRIFT

(45) Veröffentlichungstag und Bekanntmachung des Hinweises auf die Patenterteilung:
25.08.1999 Patentblatt 1999/34

(21) Anmeldenummer: 97920518.4

(22) Anmeldetag: 14.03.1997

(51) Int Cl.6: **F02D 41/18**, F02D 41/14, F02D 21/08

(86) Internationale Anmeldenummer:
PCT/DE97/00529

(87) Internationale Veröffentlichungsnummer:
WO 97/35106 (25.09.1997 Gazette 1997/41)

(54) **VERFAHREN ZUM MODELLGESTÜTZTEN BESTIMMEN DER IN DIE ZYLINDER EINER BRENNKRAFTMASCHINE EINSTRÖMENDEN FRISCHLUFTMASSE BEI EXTERNER ABGASRÜCKFÜHRUNG**

PROCESS FOR MODEL-ASSISTED DETERMINATION OF FRESH AIR MASS FLOWING INTO THE CYLINDER OF AN INTERNAL COMBUSTION ENGINE WITH EXTERNAL EXHAUST-GAS RECYCLING

PROCEDE DE DETERMINATION ASSISTEE PAR UN MODELE DU VOLUME D'AIR FRAIS ENTRANT DANS LE CYLINDRE D'UN MOTEUR A COMBUSTION INTERNE AVEC RECYCLAGE EXTERNE DES GAZ D'ECHAPPEMENT

(84) Benannte Vertragsstaaten:
DE FR GB SE

(30) Priorität: 15.03.1996 DE 19610290

(43) Veröffentlichungstag der Anmeldung:
30.12.1998 Patentblatt 1998/53

(73) Patentinhaber: SIEMENS AKTIENGESELLSCHAFT
80333 München (DE)

(72) Erfinder:
• TREINIES, Stefan
  D-93055 Regensburg (DE)
• RÖSEL, Gerd
  D-93057 Regensburg (DE)
• ENGL, Maximilian
  D-86316 Friedberg (DE)

(56) Entgegenhaltungen:
EP-A- 0 719 919     WO-A-95/06295
US-A- 5 094 213     US-A- 5 205 260

**Beschreibung**

Verfahren zum modellgestützten Bestimmen der in die Zylinder einer Brennkraftmaschine einströmenden Frischluftmasse bei externer Abgasrückführung

Die Erfindung betrifft ein Verfahren zum modellgestützten Bestimmen der in die Zylinder einer Brennkraftmaschine einströmenden Frischluftmasse bei externer Abgasrückführung gemäß dem Oberbegriff von Patentanspruch 1.

Motorsteuerungssysteme für Brennkraftmaschinen, die mit Kraftstoffeinspritzung arbeiten, verwenden als Maß für die Motorlast entweder die vom Motor angesaugte Luftmasse oder den Saugrohrdruck.

Luftmassengeführte Motorsteuerungssysteme benötigen also für die Berechnung der Einspritzzeit diejenige Frischluftmasse, die aus dem Saugrohr heraus in die jeweiligen Zylinder strömt. Ist die Brennkraftmaschine mit einer externen Abgasrückführvorrichtung ausgestattet, mit deren Hilfe ein Teil des Abgases in den Ansaugtrakt zurückgeführt wird, so stellt im Instationärbetrieb, der z.B. durch eine Änderung der externen Abgasrückführrate und/oder der Drosselklappenstellung hervorgerufen werden kann, das Signal eines stromaufwärts der Drosselklappe angeordneten Luftmassenmessers kein Maß für die tatsächliche Füllung der Zylinder dar. Die Füllung ändert sich entsprechend der Änderung des Frischgaspartialdruckes im Saugrohr, so daß zur exakten Bestimmung der Lastgröße der Absolutdruck und die Partialdrücke im Saugrohr bekannt sein müssen.

Saugrohrdruckgeführte Motorsteuerungssysteme können über eine Druckmessung nur den Absolutdruck im Saugrohr erfassen. Da die Kraftstoffzumessung jedoch durch den Frischgaspartialdruck bestimmt wird, müssen der Frischgas- und bei Abgasrückführung auch der Restgaspartialdruck auf geeignete Weise bebestimmt werden.

Auf physikalischen Ansätzen basierende modellgestützte Berechnungsmethoden stellen einen guten Ausgangspunkt zur genauen Bestimmung der Luftmasse dar.

In der nicht vorveröffentlichten deutschen Patentanmeldung P 195 13 601.2 derselben Anmelderin ist ein Verfahren zum modellgestützten Bestimmen der in die Zylinder einer Brennkraftmaschine ohne Abgasrückführung einströmenden Luftmasse beschrieben. Mit Hilfe eines Saugrohrfüllungsmodells werden dabei die Größen Saugrohrdruck, Luftmassenstrom an der Drosselklappe und Luftmassenstrom in den Zylinder aus dem Drosselklappenöffnungsgrad und der Motordrehzahl angegeben und eine Lastgröße berechnet, auf dessen Grundlage die Einspritzzeit bestimmt wird.

Auf der Basis des Signals des Lasterfassungssensors, d.h. des Luftmassenmessers bzw. des Saugrohrdrucksensors, werden über einen Modellregelkreis die Wirkung von Parameterfehlern des Saugrohrfüllungsmodells reduziert, indem die Abweichungen zwischen der Meßgröße und der entsprechenden Modellgröße minimiert werden. Dieser Zugang gestattet eine permanente Modellkorrektur im stationären und instationären Motorbetrieb, so daß die Lastgröße der Brennkraftmaschine mit hoher Genauigkeit geschätzt werden kann.

Aus der DE 39 19 488 C2 ist eine Vorrichtung zur Regelung und zur Vorausbestimmung der Ansaugluftmenge einer saugrohrdruckgeführten Brennkraftmaschine bekannt, bei der der Drosselklappenöffnungsgrad und die Motordrehzahl als Grundlage zur Berechnung des derzeitigen Wertes der in den Brennraum der Maschine eingesaugten Luft verwendet werden. Diese berechnete, gegenwärtige Ansaugluftmenge wird dann als Grundlage zur Berechnung des vorausbestimmten Wertes für die Ansaugluftmenge, die in den Brennraum der Maschine zu einer bestimmten Zeit von dem Punkt an, an dem die Berechnung ausgeführt wurde, einzusaugen ist, benutzt. Das Drucksignal, das stromabwärts der Drosselklappe gemessen wird, wird mit Hilfe von theoretischen Beziehungen korrigiert, so daß eine Verbesserung der Bestimmung der angesaugten Luftmasse erreicht und damit eine genauere Berechnung der Einspritzzeit möglich ist.

Der Erfindung liegt die Aufgabe zugrunde, ein Verfahren anzugeben mit dem bei einer Brennkraftmaschine mit Abgasrückführung der Frisch- und Restgaspartialdruck im Saugrohr im stationären und instationären Motorbetrieb möglichst exakt bestimmt und als Grundlage für eine genaue Berechnung der Einspritzzeit herangezogen werden kann.

Diese Aufgabe wird gemäß den Merkmalen des Patentanspruches 1 gelöst. Vorteilhafte Weiterbildungen finden sich in den Unteransprüchen.

Ein Ausführungsbeispiel des erfindungsgemäßen Verfahrens wird anhand der nachfolgenden schematischen Zeichnungen beschrieben. Dabei zeigen:

Figur 1        eine Prinzipskizze zum Saugsystem einer Otto-Brennkraftmaschine einschließlich der entsprechenden Modell- und Meßgrößen,

Figur 2        die Durchflußfunktion und die dazugehörige Polygonzugapproximation,

Figur 3        eine Prinzipdarstellung eines Modellregelkreises zur Bestimmung der in die Zylinder der Brennkraftmaschine einströmenden Frischluftmasse bei aktiver Abgasrückführung und

Figur 4        eine Prinzipdarstellung eines Modellregelkreis zur Korrektur des Zusammenhanges zwischen Saugrohrdruck und Luftmasse während abgeschalteter Abgasrückführung

Ausgehend von einem bekannten Ansatz ergibt sich eine Modellbeschreibung, die auf einer nichtlinearen

2

Differentialgleichung basiert. Im folgenden wird eine Approximation dieser nichtlinearen Gleichung vorgestellt. Im Ergebnis dieser Approximation läßt sich das Systemverhalten mittels einer bilinearen Gleichung beschreiben, die die schnelle Lösung der Beziehung im Motorsteuergerät des Kraftfahrzeugs unter Echtzeitbedingungen gestattet. Der gewählte Modellansatz beinhaltet dabei die Modellierung der externen Abgasrückführung und von variablen Saugsystemen und Systemen mit variabler Ventilsteuerung. Die durch diese Anordnung und durch dynamische Nachladung, d.h. durch Reflexionen von Druckwellen im Saugrohr hervorgerufenen Effekte, können ausschließlich durch die Wahl stationär bestimmbarer Parameter des Modelles sehr gut berücksichtigt werden. Alle Modellparameter sind einerseits physikalisch interpretierbar und andererseits ausschließlich aus stationären Messungen zu gewinnen.

Die meisten Algorithmen zur zeitdiskreten Lösung der Differentialgleichungen für das Modell eines Ansaugsystems erfordern vor allem bei geringem Druckabfall über der Drosselklappe, d.h. bei Vollast eine sehr kleine Rechenschrittweite, um numerisch stabil zu arbeiten. Die Folge wäre ein unvertretbarer Rechenaufwand bei der Bestimmung der Lastgröße. Da Lasterfassungssysteme meist segmentsynchron arbeiten, d.h. für 4-Zylindermotoren wird alle 180° KW ein Meßwert abgetastet, muß die Modellgleichung ebenfalls segmentsynchron gelöst werden. Im nachfolgenden wird ein absolut stabiles Differenzenschema zur Lösung von Differentialgleichungen eingesetzt, das numerische Stabilität bei beliebiger Schrittweite garantiert.

Dieses System zur modellgestützten Lasterfassung ist in den bekannten Motorsteuerungssystemen, d.h. bei luftmassengeführten bzw. saugrohrdruckgeführten Motorsteuerungssystemen einsetzbar und im folgenden wird ein Korrekturalgorithmus in Form eines Modellregelkreises formuliert, der bei auftretenden Ungenauigkeiten von Modellparametern eine permanente Genauigkeitsverbesserung, d.h. einen Modellabgleich im stationären und instationären Betrieb gestattet.

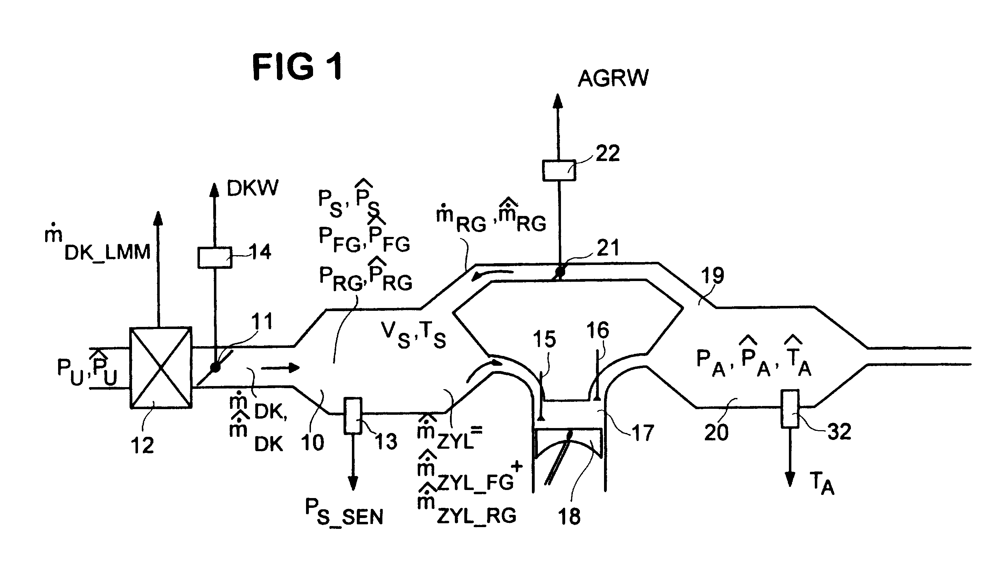

Bei der modellgestützten Berechnung der in die Zylinder der Brennkraftmaschine einströmenden Frischluftmasse wird von der in Figur 1 dargestellten prinzipiellen Anordnung ausgegangen. Aus Gründen der Übersichtlichkeit ist dabei nur ein Zylinder der Brennkraftmaschine dargestellt. Mit dem Bezugzeichen 10 ist dabei ein Saugrohr einer Brennkraftmaschine bezeichnet, in dem eine Drosselklappe 11 angeordnet ist. Die Drosselklappe 11 ist mit einem, den Öffnungsgrad dieser Drosselklappe ermittelnden Drosselklappenstellungsfühler 14 verbunden. Stromaufwärts der Drosselklappe 11 ist ein Luftmassenmesser 12 und stromabwärts der Drosselklappe ist ein Saugrohrdruckfühler 13 im Saugrohr 10 angeordnet. Die Ausgangssignale $\dot{m}_{DK\_LMN}$ DKW, $P_{S\_SEN}$ des Luftmassenmessers 12, des Drosselklappenstellungsfühlers 14 und des Saugrohrdrucksensors 13 sind mit Eingängen einer nicht dargestellten, an sich bekannten elektronischen Steuerungseinrichtung der Brennkraftmaschine verbunden. Außerdem sind in Figur 1 noch schematisch ein Einlaßventil 15, ein Auslaßventil 16, sowie ein in einem Zylinder 17 beweglicher Kolben 18 dargestellt.

zum Rückführen eines Teils des Abgases in der mit einem Pfeilsymbol gekennzeichneten Richtung ist eine Abgasrückführleitung 19 vorgesehen, die einen Abgastrakt 20 mit dem Saugrohr 10 derart verbindet, daß Abgas stromabwärts der Drosselklappe 11 in das Saugrohr 10 eingeleitet werden kann. Ein im Abgastrakt 20 angeordneter Temperatursensor 32 gibt ein der Temperatur des Abgases entsprechendes Signal an die Steuerungseinrichtung der Brennkraftmaschine ab. In die Abgasrückführleitung 19 ist ein Abgasrückführventil 21 eingeschaltet, das entweder als pneumatisch arbeitendes Ventil ausgestaltet ist und über einen elektropneumatischen Wandler mittels eines Tastverhältnisses angesteuert wird oder als elektrisch betätigtes Ventil realisiert ist und durch entsprechende Ansteuersignale vom elektronischen Steuergerät der Brennkraftmaschine den Öffnungsquerschnitt der Abgasrückführleitung 19 verändert. Dem Abgasrückführventil 21 ist ein Stellungsfühler 22 zugeordnet, der ein dem Öffnungsgrad des Abgasrückführventils 21 entsprechendes Signal AGRW an die elektronische Steuerungseinrichtung abgibt.

Außerdem sind in Figur 1 ausgewählte Größen bzw. Parameter des Saugsystems eingezeichnet. Dabei bedeutet das Dachsymbol "∧" über einer Größe, daß es sich um eine Modellgröße handelt, während Größen ohne Dachsymbol Meßgrößen repräsentieren. Im einzelnen bedeuten:

$P_U$ Umgebungsdruck, $P_S$ Saugrohrdruck, $T_S$ Temperatur der Luft im Saugrohr, $V_S$ Saugrohrvolumen, $P_A$ Abgasgegendruck, $T_A$ Abgastemperatur, $P_{RG}$ Restgaspartialdruck im Saugrohr, $P_{FG}$ Frischgaspartialdruck im Saugrohr.

Größen mit einem Punkfsymbol kennzeichnen die erste zeitliche Ableitung der entsprechenden Größen. Mit $\dot{m}_{DK}$ ist somit der Luftmassenstrom an der Drosselklappe, mit $\dot{m}_{RG}$ der Restgasmassenstrom am Abgasrückführventil, mit $\dot{m}_{Zyl\_FG}$ der Frischgasmassenstrom in den Zylinder und mit $\dot{m}_{Zyl\_RG}$ der Restgasmassenstrom und mit $\dot{m}_{Zyl}$ der Gesamtmassenstrom in den Zylinder bezeichnet.

Sind der Abgasgegendruck, der Öffnungsgrad des Abgasrückführventils und die Abgastemperatur bekannt, entweder durch eine betriebspunkfabhängige Parameterisierung mittels Kennfelder oder durch Auswerten der Signale der entsprechenden Sensoren, so kann der Massenstrom durch das Abgasrückführventil berechnet werden.

Unter der Voraussetzung konstanter Temperatur der Luft im Saugrohr läßt sich die Differentialgleichung aus der Zustandsgleichung idealer Gase zur Berechnung des Absolutdrucks im Saugrohr aufstellen (vgl. Fig.1) :

$$\hat{\dot{P}}_S = \frac{R_L \cdot T_S}{V_S} \cdot (\hat{\dot{m}}_{DK} + \hat{\dot{m}}_{RG} - \hat{\dot{m}}_{Zyl}) \qquad\qquad (1.0)$$

Dabei gilt:

$\hat{\dot{P}}_s$      zeitliche Ableitung der Modellgröße Saugrohrdruck

$R_L$:      allgemeine Gaskonstante

$T_S$:      Temperatur der Luft im Saugrohr

$V_S$:      Saugrohrvolumen

$\hat{\dot{m}}_{DK}$:      Modelluftmassenstrom an der Drosselklappe

$\hat{\dot{m}}_{RG}$:      Modellrestgasmassenstrom am Abgasrückführventil

$\hat{\dot{m}}_{Zyl}$:      Modellgröße des Gesamtmassenstroms in den Zylinder

Die durch (1.0) beschriebenen Verhältnisse sind auf Mehrzylinder-Brennkraftmaschinen mit Schwingrohr-(Schaltsaugrohr-) und/oder Resonanzsaugsysteme ohne strukturelle Änderungen anwendbar.

Für Systeme mit Multi-Point-Einspritzungen, bei denen die Kraftstoffzumessung durch mehrere Einspritzventile erfolgt, gibt die Gleichung (1.0) die Verhältnisse genauer wieder als dies bei Single-Point-Einspritzungen, d.h. bei Einspritzungen, bei denen der Kraftstoff mittels eines einzigen Kraftstoffeinspritzventiles zugemessen wird, der Fall ist. Bei erstgenannter Art der Kraftstoffzumessung ist nahezu das gesamte Ansaugsystem mit Luft gefüllt. Lediglich in einem kleinen Bereich vor den Einlaßventilen befindet sich ein Kraftstoff-Luftgemisch. Im Gegensatz dazu ist bei Single-Point-Einspritzsystemen das gesamte Saugrohr von der Drosselklappe bis zum Einlaßventil mit Kraftstoff-Luft-Gemisch gefüllt, da das Einspritzventil vor der Drosselklappe angeordnet ist. In diesem Fall stellt die Annahme eines idealen Gases eine stärkere Näherung dar, als dies bei der Multi-Point-Einspritzung der Fall ist. Bei Single-Point-Einspritzung erfolgt die Kraftstoffzumessung entsprechend $\hat{\dot{m}}_{DK}$, bei Multi-Point-Ein-spritzungen entsprechend $\hat{\dot{m}}_{Zyl}$.

Im folgenden wird die Berechnung der Massenströme $\hat{\dot{m}}_{DK}$ und $\hat{\dot{m}}_{Zyl}$ näher beschrieben.

Die Modellgröße des Luftmassenstromes an der Drosselklappe $\hat{\dot{m}}_{DK}$ wird durch die Durchflußgleichung idealer Gase durch Drosselstellen beschrieben. Der Luftmassenstrom $\hat{\dot{m}}_{DK}$ wird demnach durch die Beziehung

$$\hat{\dot{m}}_{DK} = \hat{A}_{RDK} \cdot \sqrt{\frac{2\kappa}{\kappa-1} \cdot \frac{1}{R_L \cdot T_S}} \cdot \hat{P}_U \cdot \psi \qquad\qquad (2.0)$$

mit der Durchflußfunktion

$$\psi = \sqrt{\left(\frac{\hat{P}_S}{\hat{P}_U}\right)^{\frac{2}{\kappa}} - \left(\frac{\hat{P}_S}{\hat{P}_U}\right)^{\left(\frac{\kappa+1}{\kappa}\right)}}$$

für überkritische Druckverhältnisse bzw.
$\psi$ = const. für kritische Druckverhältnisse
bestimmt.

Dabei bedeuten:

$\hat{\dot{m}}_{DK}$:      Modellgröße des Luftmassenstromes an der Drosselklappe

$\hat{A}_{RDK}$:      reduzierter Strömungsquerschnitt

$\kappa$:      Adiabatenexponent

$R_L$:      allgemeine Gaskonstante

$T_S$:      Temperatur der Luft im Saugrohr

$\hat{P}_U$:      Modellgröße des Umgebungsdruckes

$\hat{P}_S$:      Modellgröße des Saugrohrdruckes

$\psi$ : Durchflußfunktion

An der Drosselstelle, d.h. an der Drosselklappe 11 auftretende Strömungsverluste werden durch den reduzierten Querschnitt an der Drosselklappe $\hat{A}_{RDK}$ berücksichtigt. Aus stationären Messungen kann bei bekannten Drükken vor und hinter der Drosselstelle und bekanntem Massenstrom durch die Drosselstelle eine Zuordnung zwischen dem vom Drosselklappenstellungsfühler 14 ermittelten Drosselklappenwinkel DKW und dem entsprechendem reduzierten Querschnitt $\hat{A}_{RDK}$ angegeben werden.

Wird der Luftmassenstrom $\hat{\dot{m}}_{DK}$ an der Drosselklappe durch die Beziehung (2.0) beschrieben, so entsteht ein komplizierter Algorithmus zur numerisch richtigen Lösung der Differentialgleichung (1.0) mit einem absolut stabilen Differenzenschema. Zur Reduktion des Rechenaufwandes wird die Durchflußfunktion $\psi$ durch einen Polygonzug approximiert.

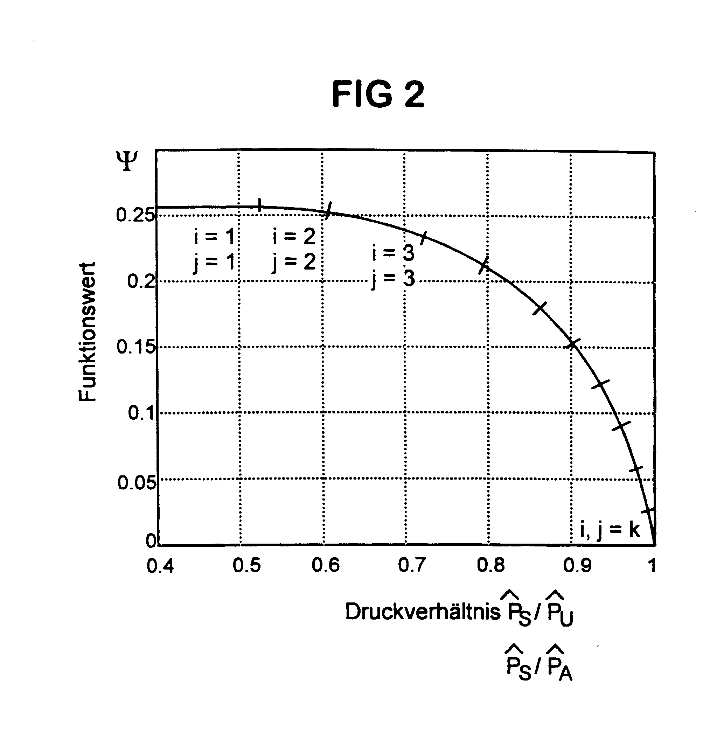

Figur 2 zeigt den Verlauf der Durchflußfunktion $\psi$ und das darauf angewandte Approximationsprinzip. Innerhalb eines Abschnittes i,j (i,j = 1...k) wird die Durchflußfunktion $\psi$ durch eine Gerade dargestellt. Mit einer vertretbaren Anzahl von Geradenabschnitten kann damit eine gute Approximation der Durchflußfunktion durch

$$\Psi = \left( m_i \, \frac{\hat{P}_S}{\hat{P}_U} + n_i \right) \qquad\qquad \mathrm{i} \;=\; (1...k) \qquad\qquad (2.2)$$

erreicht werden.

In dieser Form beschreibt $m_i$ die Steigung und $n_i$ das Absolutglied (Offset) des jeweiligen Geradenabschnittes. In den einzelnen Abschnitten der Linearisierung gelten jeweils die Werte $m_i$, $n_i$. Die Werte für die Steigung und für das Absolutglied werden in Tabellen als Funktion des Verhältnisses Saugrohrdruck zu Umgebungsdruck $\frac{P_S}{P_U}$ abgelegt.

Auf der Abszisse von Figur 2 ist das Druckverhältnis $\frac{P_S}{P}$ bzw. das Verhältnis Saugrohrdruck zu Abgasgegendruck $\frac{P_S}{P_A}$ und auf der Ordinate der Funktionswert (0 - 0.3) der Durchflußfunktion $\psi$ aufgetragen.

Durch einen solchen Ansatz kann die Gleichung (2.0) zur Berechnung des Luftmassenstromes an der Drosselklappe $\hat{\dot{m}}_{DK}$ durch die Beziehung

$$\hat{\dot{m}}_{DK} = \hat{A}_{RDK} \cdot \sqrt{\frac{2\kappa}{k-1} \cdot \frac{1}{R_L \cdot T_S}} \cdot \hat{P}_U \cdot \left( m_i \, \frac{\hat{P}_S}{\hat{P}_U} + n_i \right) \qquad\qquad (2.3)$$

für i = (1...k)
approximiert werden.

Die Berechnung des Restgasmassenstroms am Abgasrückführventil erfolgt ebenfalls mit der Durchflußgleichung idealer Gase für Drosselstellen. Am Abgasrückführventil herrscht jedoch das Druckgefälle zwischen Abgasgegendruck $P_A$ und Saugrohrdruck $p_S$, sowie das Abgastemperaturniveau $T_A$. Für die Approximation der Durchflußfunktion $\psi$ sind in diesem Fall die Werte $m_j$ und $n_j$ zu berücksichtigen, da sich der Umgebungsdruck $\hat{P}_U$ vom Abgasgegendruck $\hat{P}_A$ unterscheidet (Figur 2). Auftretende Strömungsverluste werden durch den reduzierten Strömungsquerschnitt an der Drosselstelle Abgasrückführventil $A_{RRG}$ beschrieben.

$$\hat{\dot{m}}_{RG} = \hat{A}_{RRG} \cdot \sqrt{\frac{2\kappa}{\kappa-1} \cdot \frac{1}{R_L \cdot T_A}} \cdot \hat{P}_U \cdot \left( m_j \, \frac{\hat{P}_S}{\hat{P}_U} + n_j \right) \qquad\qquad (3.0)$$

Die in den jeweiligen Zylinder der Brennkraftmaschine einströmende Luftmasse läßt sich analytisch nur schwer berechnen, da sie stark vom Ladungswechsel abhängt. Die Füllung der Zylinder wird weitestgehend durch den Saugrohrdruck, die Drehzahl und durch die Ventilsteuerungszeiten bestimmt.

Zur möglichst genauen Berechnung des Massenstroms in den jeweiligen Zylinder $\hat{\dot{m}}_{zyl}$ ist deshalb einerseits die Beschreibung der Verhältnisse im Ansaugtrakt der Brennkraftmaschine mittels partieller Differentialgleichungen und andererseits die Berechnung des Massenstromes am Einlaßventil nach der Durchflußgleichung als erforderliche Randbedingung notwendig. Erst dieser komplizierte Ansatz gestattet die Berücksichtigung dynamischer Nachladeeffekte, die von der Drehzahl, der Saugrohrgeometrie, der Zylinderzahl sowie den Ventilsteuerzeiten maßgeblich beeinflußt werden.

Da eine Berechnung nach oben genanntem Ansatz in der elektronischen Steuerungseinrichtung der Brennkraftmaschine nicht realisierbar ist, geht eine mögliche Näherung von einem einfachen Zusammenhang zwischen Saugrohrdruck $\hat{P}_S$ und Zyindermassenstrom $\dot{\hat{m}}_{zyl}$ aus. Für einen weiten Bereich der sinnvollen Ventilsteuerzeiten kann dafür in guter Näherung von einem linearen Ansatz der Form

$$\dot{\hat{m}}_{Zyl} = \gamma_1 \cdot \hat{P}_S + \gamma_0 \qquad\qquad (4.0)$$

ausgegangen werden.

Die Steigung $\gamma_1$ und das Absolutglied $\gamma_0$ der Beziehung (4.0) sind dabei, unter Berücksichtigung aller wesentlichen Einflußfaktoren Funktionen der Drehzahl, der Saugrohrgeometrie, der Zylinderzahl, der Ventilsteuerzeiten sowie der Temperatur der Luft im Saugrohr $T_S$. Die Abhängigkeit der Werte von $\gamma_1$ und $\gamma_0$ von den Einflußgrößen Drehzahl, Saugrohrgeometrie, Zylinderzahl und den Ventilsteuerzeiten und Ventilerhebungskurven kann dabei über stationäre Messungen ermittelt werden. Über diese Wertebestimmung wird ebenfalls der Einluß von Schwingrohr- und/oder Resonanzsaugsystemen auf die von der Brennkraftmaschine angesaugte Luftmasse gut wiedergegeben. Die Werte von $\gamma_1$ und $\gamma_0$ sind in Kennfeldern der elektronischen Motorsteuerungseinrichtung abhängig von der Drehzahl n abgelegt.

Als bestimmende Größe zur Ermittlung der Motorlast wird der Saugrohrdruck $P_S$ ausgewählt. Mit Hilfe der Modell-Differentialgleichung soll diese Größe möglichst exakt und schnell geschätzt werden. Die Schätzung von $\hat{P}_S$ erfordert die Lösung der Gleichung (1.0).

Mit den Gleichungen (2.3), (3.0) und (4.0) kann die Formel (1.0) durch die Beziehung

$$\dot{\hat{P}}_S = \frac{R_L \cdot T_S}{V_S} \cdot \left( \hat{A}_{RDK} \cdot \sqrt{\frac{2\kappa}{(\kappa-1) \cdot R_L \cdot T_S}} \cdot \hat{P}_U \cdot \left[ m_i \cdot \frac{\hat{P}_S}{\hat{P}_U} + n_i \right] + \hat{A}_{RRG} \cdot \sqrt{\frac{2\kappa}{(\kappa-1) \cdot R_L \cdot T_A}} \cdot \hat{P}_A \cdot \left[ m_j \cdot \frac{\hat{P}_S}{\hat{P}_A} + n_j \right] - \left\{ \gamma_1 \cdot \hat{P}_S + \gamma_0 \right\} \right) \qquad (5.0)$$

für i,j = (1...k)
approximiert werden.

Zur Lösung der Gleichung (5.0) wird diese Beziehung in eine geeignete Differenzengleichung übergeführt.

Als Kriterium zur Auswahl des geeigneten Differenzenschemas können die folgenden prinzipiellen Anforderungen an die Lösungseigenschaften der zur bildenden Differenzengleichung formuliert werden:

1. Das Differenzenschema muß auch unter extremen dynamischen Anforderungen konservativ sein, d.h. die Lösung der Differenzengleichnung muß der Lösung der Differentialgleichung entsprechen,
2. die numerische Stabilität muß für Abtastzeiten, die den maximal möglichen Segmentzeiten entsprechen, im gesamten Arbeitsbereich (Dynamikbereich) das Saugrohrdruckes garantiert sein.

Forderung 1 ist durch einen impliziten Rechenalgorithmus erfüllbar. Aufgrund der Approximation der nichtlinearen Differentialgleichung (1.0) durch eine bilineare Gleichung (5.0) ist das entstehende implizite Lösungsschema ohne Einsatz iterativer Verfahren lösbar, da die Differenzengleichung in eine explizite Form überführt werden kann.

Die zweite Forderung ist aufgrund der Konditionierung der Differentialgleichung (1.0) und deren Approximation (5.0) nur durch eine Rechenvorschrift zur Bildung der Differenzengleichung erfüllbar, die absolut stabil arbeitet. Diese Verfahren werden auch als A-stabile Verfahren bezeichnet. Kennzeichnend für diese A-Stabilität ist die Eigenschaft des Algorithmus, bei einem stabilen Ausgangsproblem für beliebige Werte der Abtastzeit, d.h. Segmentzeit $T_{AB}$ numerisch stabil zu sein. Eine mögliche Rechenvorschrift zur numerischen Lösung von Differentialgleichungen, die beiden Forderungen gerecht wird, ist die Trapezregel.

Die durch Anwendung der Trapezregel entstehende Differenzengleichung lautet im vorliegenden Fall

$$\hat{P_S}\,[N] = \hat{P_S}\,[N-1] + \frac{T_{AB}}{2}\cdot\left(\dot{\hat{P}}_S[N-1] + \dot{\hat{P}}_S[N]\right) \qquad (5.1)$$

für N = (i...∞)

$T_{AB}$ bezeichnet die Zeit zwischen 2 Abtastschritten N.

Wird die Differentialgleichung (5.0) mit Hilfe der Trapezregel (5.1) gelöst, so ergibt sich für den Saugrohrdruck zum Abtastschritt N folgende Beziehung.

$$P_S[N] = \frac{P_S[N-1] + \dfrac{T_{AB}}{2}\cdot\dot{\hat{P}}_S[N-1]}{1 - \dfrac{T_{AB}}{2}\cdot\dfrac{R_L\cdot T_S}{V_S}\cdot\left(\hat{A}_{RDK}[N]\cdot\sqrt{\dfrac{2\chi}{x-1}\dfrac{1}{R_L\cdot T_s}}\cdot m_i + \hat{A}_{RRG}[N]\cdot\sqrt{\dfrac{2\chi}{\chi-1}\dfrac{1}{R_L\cdot T_A}}\cdot m_j - \gamma_1\right)}$$

$$+ \frac{\dfrac{T_{AB}}{2}\cdot\dfrac{R_L\cdot T_S}{V_S}\cdot\left(\hat{A}_{RDK}[N]\cdot\sqrt{\dfrac{2\chi}{\chi-1}\dfrac{1}{R_L\cdot T_S}}\cdot n_i\cdot\hat{P}_U + \hat{A}_{RRG}[N]\cdot\sqrt{\dfrac{2\chi}{\chi-1}\dfrac{1}{R_L\cdot T_A}}\cdot n_j\cdot\hat{P}_A - \gamma_0\right)}{1 - \dfrac{T_{AB}}{2}\cdot\dfrac{R_L\cdot T_S}{V_S}\cdot\left(\hat{A}_{RDK}[N]\cdot\sqrt{\dfrac{2\chi}{x-1}\dfrac{1}{R_L\cdot T_x}}\cdot m_i + \hat{A}_{RRG}[N]\cdot\sqrt{\dfrac{2\chi}{\chi-1}\dfrac{1}{R_L\cdot T_A}}\cdot m_j - \gamma_1\right)}$$

$$\text{für } N = (1...\infty) \text{ und } i,j = (1...k) \qquad (5.2)$$

[N] bedeutet dabei das aktuelle Segment bzw. den aktuellen Rechenschritt, [N+1] das nächstfolgende Segment bzw. den nächstfolgenden Rechenschritt.

Ist der Gesamtdruck im Saugrohr bekannt, so kann die Änderung des Restgaspartialdrucks $P_{RG}$ im Saugrohr nach folgender Beziehung berechnet werden:

$$\dot{\hat{P}}_{RG} = \frac{R_L\cdot T_S}{V_S}\cdot\left(\dot{\hat{m}}_{RG} - \dot{\hat{m}}_{Zyl\_RG}\right) \qquad (6.0)$$

mit der Gleichung (3.0)

$$\dot{\hat{m}}_{RG} = \hat{A}_{RRG}\cdot\sqrt{\frac{2\chi}{\chi-1}\frac{1}{R_L\cdot T_A}}\cdot\hat{P}_A\cdot\left(m_j\cdot\frac{\hat{P}_S}{\hat{P}_A} + n_j\right)$$

als Restgasmassenstrom durch das Abgasrückführventil und mit

$$\dot{\hat{m}}_{Zyl\_RG} = \gamma_1\cdot\hat{P}_{RG} \qquad (7.0)$$

als Restgasmassenstrom in den Zylinder durch externe Abgasrückführung.

Wendet man die Trapezregel (5.1) zur Lösung der Differentialgleichung für den Restgaspartialdruck im Saugrohr (6.0) an, so ergibt sich die Beziehung

$$\hat{P}_{RG}[N] = \frac{\hat{P}_{RG}[N-1] + \frac{T_{AB}}{2} \cdot \left( \hat{P}_{RG}[N-1] + \frac{R_L \cdot T_S}{V_S} \cdot \hat{A}_{RRG}[N] \cdot \sqrt{\frac{2 \cdot \kappa}{(\kappa-1)) \cdot R_L \cdot T_A}} \cdot n_j \right)}{1 - \frac{T_{AB}}{2} \cdot \frac{R_L \cdot T_S}{V_S} \cdot \left( \hat{A}_{RRG}[N] \cdot \sqrt{\frac{2 \cdot \kappa}{(\kappa-1) \cdot R_L \cdot T_A}} \cdot m_j - \gamma_1 \right)}$$

$$(8.1)$$

zur Berechnung des Restgaspartialdruckes zum Zeitpunkt N. Weiterhin gilt die Beziehung:

$$\hat{P}_S = \hat{P}_{FG} + \hat{P}_{RG} \qquad (9.0)$$

Der Frischgaspartialdruck $\hat{P}_{FG}$ ist dann:

$$\hat{P}_{FG} = \hat{P}_S - \hat{P}_{RG} \qquad (9.1)$$

Damit sind der Frischgas - und Restgaspartialdruck im Saugrohr im stationären und instationären Motorbetrieb bekannt. Mit dem Frischgaspartialdruck kann der Frischluftmassenstrom in die jeweiligen Zylinder berechnet werden:

$$\hat{\dot{m}}_{ZYL\_FG} = \gamma_1 \cdot \hat{P}_{FG} + \gamma_0 \qquad (10.0)$$

Durch einen einfachen Integrationsalgorithmus erhält man die während eines Ansaugtaktes von der Brennkraftmaschine angesaugte Luftmasse.

$$\hat{m}_{ZYL\_FG} \approx \frac{T_{AB}}{2} \cdot (\hat{\dot{m}}_{ZYL\_FG}[N] + \hat{\dot{m}}_{ZYL\_FG}[N-1]) \qquad (10.1)$$

Durch systembedingte Totzeiten bei der Kraftstoffdosierung und einer notwendigen Kraftstoffvorlagerung ist eine Vorhersage der von der Brennkraftmaschine angesaugten Luftmasse mit einem wählbaren Vorhersagehorizont wünschenswert, da nur so im instationären Betrieb eine genaue Einhaltung eines geforderten Kraftstoff-Luft-Verhältnisses möglich ist.

Bei dem beschriebenen Verfahren liegen die Modellgrößen der zeitlichen Änderung der Partialdrücke im Ansaugsystem in analytischer Form vor. Durch H-fache Anwendung der Trapezregel kann der Frischgaspartialdruck durch die Beziehung

$$\hat{P}_{FG}[N+H] = \hat{P}_{FG}[N] + \frac{T_{AB}}{2} \cdot H \cdot \left( \hat{P}_S[N-1] - \hat{P}_{RG}[N-1] + \hat{P}_S[N] - \hat{P}_{RG}[N] \right)$$

$$(10.2)$$

um H Segmente vorhergesagt werden.

Geht man von über die Vorhersagezeit konstanten Werten $\gamma_1$ und $\gamma_0$ aus, so kann die vorhergesagte Frischgasmasse im Zylinder durch die Gleichung

$$\hat{m}_{Zyl\_FG}[N+H] = T_{AB} \cdot \left( \gamma_1 \cdot \left[ \hat{P}_{FG}[N] + (H+0.5) \cdot \frac{T_{AB}}{2} \right. \right.$$
$$\left. \left( \hat{P}_S[N-1] - \hat{P}_{RG}[N-1] + \hat{P}_s[N] - \hat{P}_{RG}[N] \right) \right] + \gamma_0 \right)$$

$$(10.3)$$

bestimmt werden.

Wählt man für den Vorhersagehorizont (Prädiktionshorizont) *H* Werte in der Größenordnung von 1....3, so können mit der Formel (10.3) Vorhersageergebnisse für die von der Brennkraftmaschine angesaugten Frischgasmasse mit hoher Genauigkeit erhalten werden.

Im folgenden wird das Prinzip des Modellabgleichs für luftmassen- und saugrohrdruckgeführte Motorsteuerungssysteme beschrieben.

.Bedingt durch den Einsatz von Motoren mit variabler Ventilsteuerung und/oder veränderlicher Saugrohrgeometrie, durch Fertigungstoleranzen und Alterungserscheinungen, sowie durch Temperatureinflüsse sind die Werte von $\gamma_1$ und $\gamma_0$ mit einer gewissen Unsicherheit behaftet. Die Parameter der Gleichung zur Bestimmung des Massenstromes in den Zylindern sind, wie oben beschrieben, Funktionen vielfältiger Einflußgrößen, von denen nur die wichtigsten erfaßt werden können.

Bei der Berechnung des Massenstromes an der Drosselklappe wirken sich Meßfehler bei der Erfassung des Drosselklappenwinkels und Approximationsfehler bei der Polygonzugapproximation der Durchflußfunktion $\psi$ auf die Modellgrößen aus. Besonders bei kleinen Drosselklappenwinkeln ist die Systemempfindlichkeit gegenüber erstgenannten Fehlern besonders hoch. Daraus ergibt sich, daß kleine Änderungen der Drosselklappenstellung einen gravierenden Einluß auf Massenstrom bzw. Saugrohrdruck haben. Um die Wirkung dieser Einflüsse zu reduzieren, wird im folgenden ein Verfahren vorgeschlagen, das es gestattet, bestimmte Größen, die Einfluß auf die Modellrechnung haben, so zu korrigieren, daß eine genauigkeitsverbessernde Modellanpassung für stationären und instationären Motorbetrieb durchgeführt werden kann.

Die Anpassung der wesentlichen Parameter des Modells zur Bestimmung der Lastgröße der Brennkraftmaschine erfolgt durch die Korrektur des aus dem gemessenen Drosselklappenwinkel bestimmten reduzierten Strömungsquerschnittes $\hat{A}_{RDK}$ durch die Korrekturgröße $\Delta\hat{A}_{RDK}$:

$$\hat{A}_{RDK\_KORR} = \hat{A}_{RDK} + \Delta\hat{A}_{RDK} \qquad\qquad (11.0)$$

Je nachdem welcher Lasterfassungssensor verwendet wird, erfolgt die Berechnung der Korrekturgröße $\Delta\hat{A}_{RDK}$ in einem Modellregelkreis. Bei einer Luftmassenmessung erfolgt die Berechnung der Regelabweichung zwischen dem gemessenen Luftmassenstrom an der Drosselklappe und dem Modelluftmassenstrom an der Drosselklappe.

Bei einer Saugrohrdruckmessung erfolgt die Berechnung der Regelabweichung zwischen dem Modellsaugrohrdruck und dem gemessenen Saugrohrdruck.

Für luftmassengeführte Motorsteuerungssysteme ist also der mittels des Luftmassenmessers an der Drosselklappe gemessene Luftmassenstrom $\dot{m}_{DK\_LMN}$ die Führungsgröße dieses Regelkreises, während für saugrohrdruckgeführte Systeme der mittels des Saugrohrdrucksensors gemessene Saugrohrdruck $P_{S\_SEN}$ als Führungsgröße genutzt wird. Über eine Folgeregelung wird der Wert von $\Delta\hat{A}_{RED}$ dann so bestimmt, daß die Regelabweichung zwischen Führungsgröße und der ensprechenden Regelgröße minimiert wird.

Um auch im dynamischen Betrieb Genauigkeitsverbesserungen mit der genannten Methode zu erreichen, muß die Meßwerterfassung der Führungsgrößen möglichst exakt nachgebildet werden. In den meisten Fällen sind dabei das dynamische Verhalten des Sensors, d.h. entweder des Luftmassenmessers oder des Saugrohrdrucksensors und eine nachfolgend durchgeführte Mittelwertbildung zu berücksichtigen.

Das dynamische Verhalten des jeweiligen Sensors kann in erster Näherung als ein System erster Ordnung mit eventuell arbeitspunktabhängiger Verzögerungszeit $T_1$ modelliert werden.

Im Falle einer saugrohrdruckgeführten Motorensteuerung lautet eine mögliche Gleichung zur Beschreibung des Sensorverhaltens

$$\hat{P}_{S\_SEN}[N] = \hat{P}_{S\_SEN}[N-1] \cdot e^{-\frac{T_{AB}}{T_1}} + \hat{P}_S[N-1] \cdot \left(1 - e^{-\frac{T_{AB}}{T_1}}\right), \qquad (12.0)$$

während für ein luftmassengeführtes System die Beziehung

$$\hat{\dot{m}}_{DK\_LMM}[N] = \hat{\dot{m}}_{DK\_LMM}[N-1] \cdot e^{-\frac{T_{AB}}{T_1}} + \hat{\dot{m}}_{DK}[N-1] \cdot \left(1 - e^{-\frac{T_{AB}}{T_1}}\right) \qquad (13.0)$$

angegeben werden kann. $T_1$ bezeichnet die Verzögerungszeit des jeweiligen Sensors.

Die im Steuergerät durchgeführte Mittelwertbildung der Meßwerte über ein Segment kann durch die Beziehungen

$$\hat{P}_{S\_SEN\_MIT}[N] = \frac{1}{2} \cdot (\hat{P}_{S\_SEN}[N\text{-}1] + \hat{P}_{S\_SEN}[N]) \qquad (12.1)$$

oder

$$\hat{\dot{m}}_{DK\_LMM\_MIT}[N] = \frac{1}{2} \cdot \left(\hat{\dot{m}}_{DK-LMM}[N-1] + \hat{\dot{m}}_{DK\_LMM}[N]\right) \qquad (13.1)$$

modelliert werden.

Falls beide Lasterfassungssensoren vorhanden sind, kann zum Abgleich des Luftmassenstroms an der Drosselklappe mit dem gemessenen Luftmassenstrom der reduzierte Strömungsquerschnitt an der Drosselklappe bzw. der Umgebungsdruck verwendet werden. Der Saugrohrdrucksensor kann im Abgasrückführungsbetrieb zur Bestimmung des reduzierten Strömungsquerschnittes am Abgasrückführungsventil bzw. des Abgasgegendrucks verwendet werden.

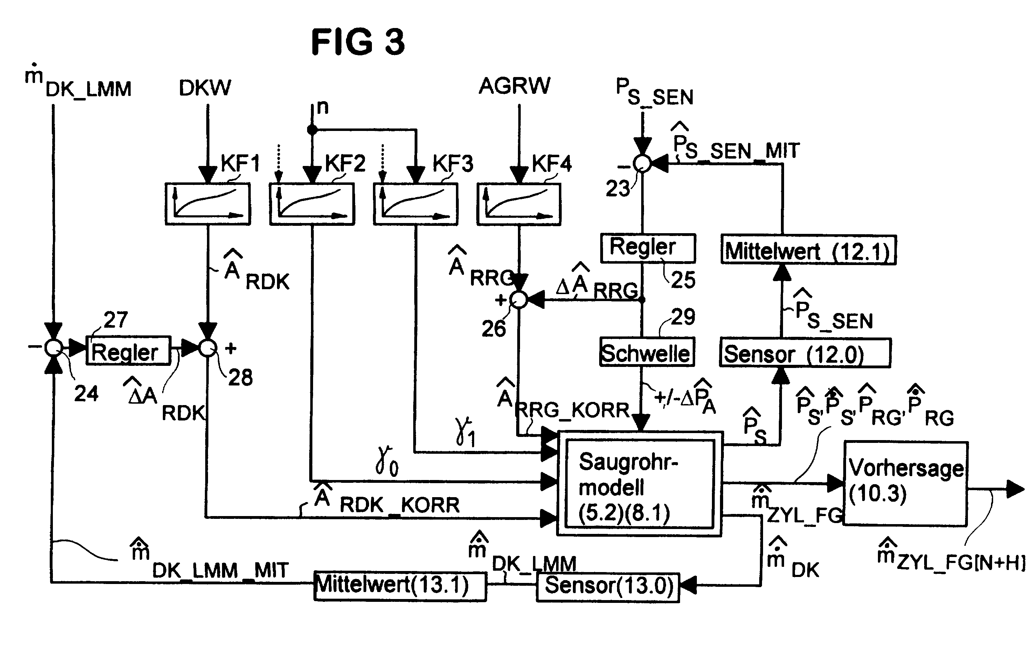

Treten Differenzen zwischen dem Modellsaugrohrdruck und dem gemessenen Saugrohrdruck auf, so werden sie durch die Anpassung des Restgasmassenstroms über die Korrektur $\hat{A}_{RRG}$ durch $\Delta\hat{A}_{RRG}$ ausgeregelt (Figur 3). Überschreitet die Stellgröße $\Delta\hat{A}_{RRG}$ eine bestimmte Schwelle in positiver Richtung so erfolgt eine Erhöhung der Modellgröße Abgasgegendruck, wird eine negative applizierbare Schwelle unterschritten, so erfolgt eine Erniedrigung der Modellgröße Abgasgegendruck.

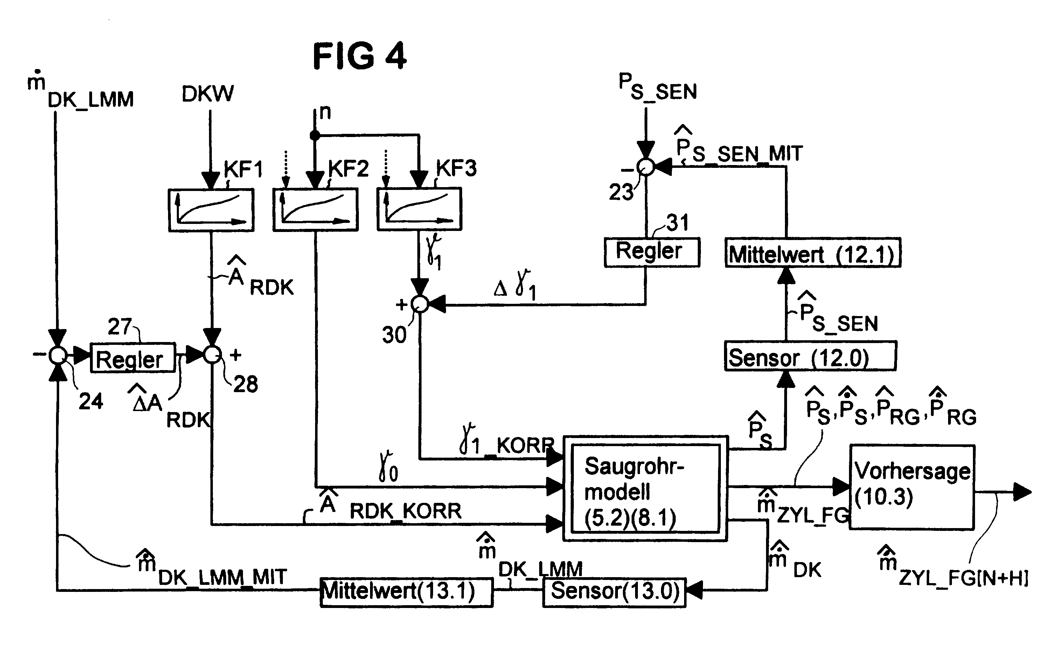

Bei geschlossenem Abgasrückführventil wird mit dem Saugrohrdrucksensor der Zusammenhang zwischen Saugrohrdruck und Luftmasse mit Hilfe des Parameters $\gamma_1$ korrigiert (Figur 4).Die Korrekturgröße wird drehzahlabhängig bestimmt und im nichtflüchtigen Speicher des Steuergeräts abgelegt. Der Korrekturwert wird auf einen Maximalwert begrenzt.

Im folgenden wird ein Modellabgleich für Motorsteuerungssysteme beschrieben, wenn beide Lasterfassungssensoren (Luftmassenmesser und Saugrohrdrucksensor) vorhanden sind. Für dieses System können die in den Figuren 3 und 4 dargestellten Modellstrukturen angegeben werden.

Der Drosselklappenstellungsfühler 14 (Figur 1) liefert ein dem Öffnungsgrad der Drosselklappe 11 entsprechendes Signal, z.B. einen Drosselklappenöffnungswinkel DKW. In einem ersten Kennfeld KF1 der elektronischen Motorsteuerungseinrichtung sind zu verschiedenen Werten dieses Drosselklappenöffnungswinkels zugehörige Werte für den reduzierten Querschnitt der Drosselklappe $\hat{A}_{RDK}$ abgespeichert. Das Teilsystem "Saugrohrmodell" in den Figuren 3 und 4 repräsentiert das durch Gleichungen (5.2) und (8.1) beschriebene Verhalten.

Führungsgrößen der Modellregelkreise sind die Meßwerte der über ein Segment gemittelten Größen des Lufmassenstromes an der Drosselklappe $\hat{\dot{m}}_{DK\_LMM}$ und des Saugrohrdruckes $P_{S\_SEN}$. Werden als Regler in den Modellkreisen PI-Regler eingesetzt, so ist die bleibende Regelabweichung null, d.h. im stationären Fall sind die Modellgrößen und die entsprechenden Meßgrößen identisch.

Die Pulsationserscheinungen des Luftmassenstromes an der Drosselklappe, die vor allem bei 4-Zylindermotoren zu beobachten sind, führen bei betragsbildenden Luftmassenmessern zu erheblichen positiven Meßfehlern und somit zu einer stark fehlerbehafteten Führungsgröße. Durch eine Abschaltung des entsprechenden Reglers, d.h. einer Verkleinerung der Reglerparameter kann zum gesteuerten modellgestützten Betrieb über; gegangen werden. Bereiche, in denen die genannten Pulsationen auftreten, können somit mit dem selben Verfahren unter Berücksichtigung dynamischer Zusammenhänge behandelt werden, wie diejenigen Bereiche, in denen eine nahezu ungestörte Führungsgröße vorliegt. Im Gegensatz zu Verfahren, die relevante Meßwerte nur in stationären Betriebspunkten berücksichtigen, bleibt das beschriebene System nahezu uneingeschränkt arbeitsfähig. Bei Ausfall des Signals des Luftmassenmessers oder des Drosselklappenstellungsfühlers ist das vorgestellte System in der Lage, ein entsprechendes Ersatzsignal zu bilden. Bei Ausfall der Führungsgröße muß der gesteuerte Betrieb realisiert werden, während im anderen Fall der geregelte Betrieb die kaum beeinträchtigte Funktionsfähigkeit des Systems garantiert.

Der Block "Saugrohrmodell" repräsentiert die Verhältnisse wie sie anhand der Gleichungen (5.2) und (8.1) beschrieben sind und hat demzufolge als Ausgangsgrößen die Modellgrößen $\hat{P}_S$ und $\hat{\dot{m}}_{DK}$, sowie den Wert für den Frischgasmassenstrom $\hat{\dot{m}}_{zyl\_FG}$ in den Zylinder der Brennkraftmaschine, der als Grundlage zur Bestimmung der Basiseinspritzzeit herangezogen wird. Nach der Modellierung des Sensorübertragungsverhaltens des Luftmassenmessers und des Saugrohrdrucksensors (Gleichungen 12.0 bzw. 13.0) werden die Modellgrößen $\hat{P}_S$ und $\hat{\dot{m}}_{DK}$ einer Mittelung gemäß Gleichung (12.1) bzw. (13.1) unterzogen, so daß die gemittelten Größen $\hat{P}_{S\_SEN\_MIT}$, $\hat{\dot{m}}_{DK\_LMM\_MIT}$ und der vom Saugrohrdrucksensor gemessene Wert $P_{S\_SEN}$ bzw der vom Luftmassenmesser gemessene Luftmassenstrom $\dot{m}_{DK\_LMM}$ jeweils einer Vergleichsstelle 23, 24 zugeführt werden können.

Die Differenz zwischen der Meßgröße und der Modellgröße des gemittelten Massenstromes an der Drosselklappe, die an der Vergleichstelle 24 gebildet wird, dient in Figur 3 und Figur 4 als Grundlage zur Berechnung des Korrekturwertes $\Delta\hat{A}_{RDK}$ im Regler 27. Die Modellgröße des reduzierten Querschnittes wird entsprechend der Gleichung (11.0) gebildet und gestattet die Korrektur der Modellgröße des Massenstromes an der Drosselklappe im stationären und instationärem Motorbetrieb.

In Figur 3 wird die Differenz zwischen der gemittelten Meßgröße und der entsprechenden Modellgröße des Saugrohrdrucks zur Berechnung eines Korrekturwertes $\Delta\hat{A}_{RRG}$ zur Beeinflussung des Restgasmassenstromes an dem AGR-Ventil verwendet. Überschreitet die Korrekturgröße $\Delta\hat{A}_{RRG}$ eine in einer Schwellwertstufe 29 festgelegte Schwelle, so erfolgt die Korrektur des Abgasgegendruckes $\hat{P}_A$ in positiver bzw. negativer Richtung entsprechend des Vorzeichens von $\Delta\hat{A}_{RRG}$.

In Figur 4 wird die Differenz zwischen der gemittelten Meßgröße und der entsprechenden Modellgröße des Saugrohrdruckes zur Korrektur des Massenstromes in den Zylinder durch eine Beeinflussung von $\gamma_1$ verwendet.

Das in Figur 3 vorgestellte Verfahren bietet den Vorzug, daß auch bei Parameterfehlern des Modells zur Lastgrößenschätzung glatte Verläufe der Lastgröße zu erwarten sind, da die Differenzenordnung zwischen dem Stelleingriff und der Lastgröße eins beträgt. Allerdings ist eine Schätzung des Umgebungsdruckes in Abhängigkeit des Wertes von $\Delta\hat{A}_{RDK}$ bzw. des Druckverhältnisses erforderlich. Das in Figur 4 vorgestellte Verfahren bietet den Vorzug, auch bei großen Druckverhältnissen $\frac{\hat{P}_S}{\hat{P}_U}$ den Massenstrom in den Zylinder in weiten Bereichen andern zu können. Veränderungen der Durchflußbeiwerte der Einlaßventile sind mit diesem Verfahren gut korrigierbar.

## Patentansprüche

1. Verfahren zum Bestimmen der einströmenden Frischluftmasse in den Zylinder einer Brennkraftmaschine mit

- einem Saugrohr (10) und eine darin angeordnete Drosselklappe (11), sowie eine den Öffnungsgrad (DKW) der Drosselklappe (19) erfassende Sensoreinrichtung (14),
- einer Abgasrückführeinrichtung (19) mit einem Abgasrückführventil (21), sowie ein den Öffnungsgrad (AGRW) des Abgasrückführventils (21) erfassenden Sensoreinrichtung (22),
- einem, ein Lastsignal ($\dot{m}_{DK\_LMM}$; $P_{S\_SEN}$) der Brennkraftmaschine erzeugenden Sensor (12; 13)
- einer elektronischen Steuerungseinrichtung, die auf der Grundlage des gemessenen Lastsignals ($\dot{m}_{DK\_LMM}$; $P_{S\_SEN}$) und der Drehzahl (n) der Brennkraftmaschine eine Grundeinspritzzeit berechnet,

**dadurch gekennzeichnet**, daß

- die Verhältnisse im Saugrohr (10) mittels eines Saugrohrfüllungsmodells (Gleichungen 5.2, 8.1) nachgebildet werden, wobei als Eingangsgrößen des Modells zumindest der Öffnungsgrad (DKW) der Drosselklappe (11), der Öffnungsgrad (AGRW) des Abgasrückführungsventils (21), der Umgebungsdruck ($P_U$), die Abgastemperatur ($T_A$), die Temperatur im Saugrohr ($T_S$) und die Ventilstellung repräsentierende Parameter herangezogen werden,
- jeweils eine Modellgröße für den Luftmassenstrom ($\hat{\dot{m}}_{DK}$) an der Drosselklappe (11) und für den Restgasmas-

senstrom ($\dot{m}_{RG}$) am Abgasrückführventil (21) gebildet wird (Gleichung 2.3; 3.0)
- jeweils eine Modellgröße für den Luftmassenstrom in den Zylinder ($\hat{\dot{m}}_{Zyl}$) bzw. für den Restgasmassenstrom in den Zylinder ($\hat{\dot{m}}_{Zyl\_RG}$) als Funktion des Saugrohrdrucks ($\hat{P}_S$) bzw. des Restgaspartialdruckes ($\hat{P}_{RG}$) gebildet wird (Gleichung 4.0; 7.0),
- aus den Modellgrößen Luftmassenstrom an der Drosselklappe ($\hat{\dot{m}}_{DK}$), Restgasmassenstrom am Abgasrückführventil ($\hat{\dot{m}}_{RG}$) und Luftmassenstrom in den Zylinder ($\hat{\dot{m}}_{Zyl}$) als bestimmende Größe zur Ermittlung der tatsächlichen Last der Brennkraftmaschine der Saugrohrdruck ($\hat{P}_S$) berechnet wird (Gleichung 5.2),
- aus den Modellgrößen Restgasmassenstrom am Abgasrückführventil ($\hat{\dot{m}}_{RG}$) und Restgasmassenstrom in den Zylinder ($\hat{\dot{m}}_{Zyl\_RG}$) der Restgaspartialdruck ($\hat{P}_{RG}$) im Saugrohr berechnet wird (Gleichung 8.1)
- aus dem Saugrohrdruck ($\hat{P}_S$) und dem Restgaspartialdruck ($\hat{P}_{RG}$) der Frischgaspartialdruck ($\hat{P}_{FG}$) bestimmt und
- aus dem Zusammenhang zwischen Frischgaspartialdruck ($\hat{P}_{FG}$) und Frischluftmassenstrom in den Zylinder ($\hat{\dot{m}}_{Zyl\_FG}$) durch Integration die in den Zylinder (17) einströmende Luftmasse ($m_{Zyl\_FG}$) erhalten wird.

2. Verfahren nach Anspruch 1,
   **dadurch gekennzeichnet,**
   daß die Modellgrößen für den Luftmassenstrom ($\hat{\dot{m}}_{DK}$) an der Drosselklappe (11) und für den Restgasmassenstrom ($\hat{\dot{m}}_{RG}$) am Abgasrückführventil (21) mit Hilfe der Durchflußgleichung idealer Gase durch Drosselstellen beschrieben werden.

3. Verfahren nach Anspruch 2,
   **dadurch gekennzeichnet,**
   daß an den Drosselstellen (11,21) auftretende Strömungsverluste jeweils durch die Verwendung reduzierter Strömungsquerschnitte ($\hat{A}_{RDK}$, $\hat{A}_{RRG}$) an den Drosselstellen berücksichtigt werden.

4. Verfahren nach Anspruch 3,
   **dadurch gekennzeichnet,**
   daß die Werte für die reduzierten Querschnitte ($\hat{A}_{RDK}$,$\hat{A}_{RRG}$) aus stationären Messungen abhängig vom Öffnungsgrad (AGRW) des Abgasrückführventils am Motorprüfstand festgelegt und in Kennfeldern (KF1; KF4) eines Speichers der Steuerungseinrichtung abgelegt sind ,

5. Verfahren nach Anspruch 2,
   **dadurch gekennzeichnet,**
   daß bei der Darstellung der Modellgrößen für den Luftmassenstrom ($\hat{\dot{m}}_{DK}$) an der Drosselklappe (11) und der Modellgröße für den Restgasmassenstrom ($\hat{\dot{m}}_{RG}$) am Abgasrückführventil (21) eine in den Durchflußgleichungen vorhandene Durchflußfunktion ($\psi$) in einzelne Abschnitte (i,j = 1...k) unterteilt wird und diese Abschnitte durch Geradenabschnitte angenähert werden, wobei für die Werte der Steigung ($m_{i,j}$) und für das Absolutglied ($n_{i,j}$) der jeweiligen Geradenabschnitte jeweils als Funktion des Verhältnisses von Saugrohrdruck ($\hat{P}_S$) zu Umgebungsdruck ($\hat{P}_U$) bzw. Saugrohrdruck ($\hat{P}_S$) zu Abgasgegendruck ($\hat{P}_A$) bestimmt und in einem Kennfeld eines Speichers der Steuerungseinrichtung abgelegt sind.

6. Verfahren nach Anspruch 1,
   **dadurch gekennzeichnet,**
   daß die Modellgröße für den Luftmassenstrom in den Zylinder ($\hat{\dot{m}}_{Zyl}$) als eine lineare Funktion des Saugrohrdrucks ($\hat{P}_S$) beschrieben wird (Gleichung 4.0) und die Steigung ($\gamma_1$) und das Absolutglied ($\gamma_0$) der linearen Funktion abhängig von mindestens einem der Parameter, Drehzahl der Brennkraftmaschine, Zylinderzahl, Saugrohrgeometrie, Temperatur der Luft ($T_S$) im Ansaugrohr (10) und Ventilsteuerzeiten festgelegt sind.

7. Verfahren nach Anspruch 1,
   **dadurch gekennzeichnet,**
   daß die Modellgröße für den Restgasmassenstrom in den Zylinder ($\hat{\dot{m}}_{Zyl\_RG}$) als eine lineare Funktion des Restgaspartialdrukkes ($\hat{P}_{RG}$) beschrieben wird (Gleichung 7.0) und die Steigung ($\gamma_1$) der linearen Funktion abhängig von mindestens einem der Parameter, Drehzahl der Brennkraftmaschine, Zylinderzahl, Saugrohrgeometrie, Temperatur der Luft ($T_S$) im Ansaugrohr (10) und Ventilsteuerzeiten festgelegt sind.

8. Verfahren nach Anspruch 6 oder 7,
   **dadurch gekennzeichnet,**
   daß die Parameter durch stationäre Messungen am Motorprüfstand ermittelt werden und in Kennfeldern (KF2,KF3) eines Speichers der Steuerungseinrichtung abgelegt sind.

9. Verfahren nach Anspruch 1,
   **dadurch gekennzeichnet,**
   daß das vom Lastsensor (12; 13) gemessene Lastsignal ($\dot{m}_{DK\_LMM}$; $P_{S\_SEN}$) zur Korrektur und damit zum Abgleich der Modellgrößen Luftmassenstrom an der Drosselklappe ($\hat{\dot{m}}_{DK}$) und Saugrohrdruck ($\hat{P}_S$) in einem Modellregelkreis herangezogen wird, wobei das Lastsignal ($\dot{m}_{DK\_LMM}$; $P_{S\_SEN}$) als Führungsgröße des Regelkreises dient.

10. Verfahren nach Anspruch 9,
    **dadurch gekennzeichnet,**
    daß der Abgleich im stationären und/oder instationären Betrieb der Brennkraftmaschine durchgeführt wird und dabei das Übertragungsverhalten (Gleichung 12.0; 13.0) des Lastsensors (12; 13) berücksichtigt wird.

11. Verfahren nach Anspruch 10,
    **dadurch gekennzeichnet,**
    daß das Übertragungsverhalten des Lastsensors (12,13) durch ein System erster Ordnung mit arbeitspunktabhängiger Verzögerungszeit (T1) modelliert wird.

12. Verfahren nach Anspruch 10,
    **dadurch gekennzeichnet,**
    daß jedem gemessenen Wert des Drosselklappenöffnungsgrades (DKW) ein Wert eines reduzierten Querschnitts der Drosselklappe ($\hat{A}_{RDK}$) zugeordnet ist und der Abgleich der Modellgröße Luftmassenstrom an der Drosselklappe ($\hat{\dot{m}}_{DK}$) durch Korrektur des reduzierten Querschnitts ($\hat{A}_{RDK}$) durch eine Korrekturgröße ($\Delta\hat{A}_{RDK}$) derart erfolgt, daß die Regelabweichung zwischen Führungsgröße ($\dot{m}_{DK\_LMM}$) und der Modellgröße ($\hat{\dot{m}}_{DK}$) minimiert wird.

13. Verfahren nach Anspruch 10,
    **dadurch gekennzeichnet,**
    daß jedem gemessenen Wert des Öffnungsgrades (AGRW) des Abgasrückführventils (21) Wert eines reduzierten Querschnitts der des Abgasrückführventils ($\hat{A}_{RRG}$) zugeordnet ist und der Abgleich der Modellgröße Saugrohrdruck ($\hat{P}_S$) durch Korrektur des reduzierten Querschnitts ($\hat{A}_{RRG}$) durch eine Korrekturgröße ($\Delta\hat{A}_{RRG}$) derart erfolgt, daß die Regelabweichung zwischen Führungsgröße ($P_{S\_SEN}$) und der Modellgröße ($\hat{P}_S$) minimiert wird.

14. Verfahren nach Anspruch 12 und 13,,
    **dadurch gekennzeichnet,**
    daß die Modellgrößen vor dem Abgleich einer Mittelung (Gleichung 12.1;13.1) unterzogen werden.

15. Verfahren nach Anspruch 13,
    **dadurch gekennzeichnet,**
    daß dann, wenn die Korrekturgröße ($\Delta\hat{A}_{RRG}$) einen vorgegebenen Schwellenwert in positiver Richtung überschreitet, eine Erhöhung der Modellgröße Abgasgegendruck ($\hat{P}_A$) erfolgt und wenn die Korrekturgröße ($\Delta\hat{A}_{RRG}$) eine negative, applizierbare Schwelle unterschreitet, eine Erniedrigung der Modellgröße Abgasgegendruck ($\hat{P}_A$) erfolgt

16. Verfahren nach Anspruch 1,
    **dadurch gekennzeichnet,**
    daß die in den Zylinder einströmende Luftmasse ($\hat{\dot{m}}_{Zyl}$) durch die Beziehung

$$\hat{m}_{Zyl}[N] = \frac{T_A}{2} \cdot \left( \hat{\dot{m}}_{Zyl}[N-1] + \hat{\dot{m}}_{Zyl}[N] \right)$$

berechnet wird, mit

| | |
|---|---|
| $T_A$: | Abtastzeit oder Segmentzeit |
| $\hat{\dot{m}}_{Zyl}[N]$ | Modellgröße des Luftmassenstromes während des aktuellen Abtastschrittes oder Segments |
| $\dot{m}_{Zyl}[N-1]$ | Modellgröße des Luftmassenstromes während des vergangenen Abtastschrittes oder Segmentes. |

**17.** Verfahren nach Anspruch 1,
**dadurch gekennzeichnet,**
daß die in den Zylinder der Brennkraftmaschine einströmende Frischgasmasse ($\hat{m}_{Zyl}[N+H]$) für einen, bezüglich der aktuellen Lasterfassung zum Abtastzeitpunkt (N) in der Zukunft liegenden, bestimmten Vorhersagehorizont (H) auf der Grundlage der zeitlichen Änderungen der Modellgrößen Partialdrücke ($\hat{P}_{FG}$, $\hat{P}_{RG}$) im Saugrohr (10) geschätzt wird.

**Claims**

1. Method for determining the fresh air mass flowing into the cylinder of a combustion engine with

   - an induction manifold (10) with a throttle valve (11) arranged within it, and a sensor device (14) which detects the degree of opening (DKW) of the throttle valve (19),

   - an exhaust gas recirculation device (19) with an exhaust gas recirculation valve (21) and a sensor device (22) which detects the degree of opening (AGRW) of the exhaust gas recirculation valve (21),

   - a sensor (12, 13) which generates a load signal ($\dot{m}_{DK\_LMM}$; $P_{S-SEN}$) of the combustion engine,

   - an electronic control device which calculates a basic injection duration from the measured load signal ($\dot{m}_{DK\_LMM}$; $P_{S\_SEN}$) and rotational speed (n) of the combustion engine,

   characterized in that

   - the conditions in the induction manifold (10) are simulated by an induction manifold charging model (equations 5.2 and 8,1), whereby at least the degree of opening (DKW) of the throttle valve (11), the degree of opening (AGRW) of the exhaust gas recirculation valve (21), the ambient pressure ($P_U$), the exhaust gas temperature ($T_A$), the temperature in the induction manifold ($T_S$) and the parameters representing the valve setting are used as input variables of the model,
   - a model variable for the air mass flow ($\dot{\hat{m}}_{DK}$) at the throttle valve (11) and for the residual gas mass flow ($\dot{\hat{m}}_{RG}$) at the exhaust gas recirculation valve (21) are formed in each case (equations 2.3 and 3.0)
   - a model variable for the air mass flow into the cylinder ($\dot{\hat{m}}_{Zyl}$) or for the residual gas mass flow into the cylinder ($\dot{\hat{m}}_{Zyl\_RC}$) are formed in each case as a function of the induction manifold pressure ($\hat{P}_S$) or residual gas partial pressure ($\hat{P}_{RG}$) (equations 4.0 and 7.0),
   - The model variables for air mass flow at the throttle valve ($\dot{\hat{m}}_{DK}$), the residual gas mass flow at the exhaust gas recirculation valve ($\dot{\hat{m}}_{RG}$) and air mass flow into the cylinder ($\dot{\hat{m}}_{Zyl}$) are used as determining variables to calculate the induction manifold pressure ($\hat{P}_S$) to determine the actual load of the combustion engine (equation 5.2).
   - the residual gas partial pressure ($\hat{P}_{RG}$) in the induction manifold is calculated from model variables for the residual gas mass flow at the exhaust gas recirculation valve ($\dot{\hat{m}}_{RG}$) and residual gas mass flow into the cylinder ($\dot{\hat{m}}_{Zyl\_RC}$) (equation 8,1),
   - the fresh gas partial pressure ($\hat{P}_{FG}$) is determined from the induction manifold pressure ($\hat{P}_S$) and residual gas partial pressure ($\hat{P}_{RG}$) and
   - the air mass ($\dot{\hat{m}}_{Zyl\_FG}$) flowing into the cylinder (17) is obtained by integration from the relationship between the fresh gas partial pressure ($\hat{P}_{FG}$) and fresh air mass flow into the cylinder ($\dot{\hat{m}}_{Zyl\_FG}$).

2. Method in accordance with claim 1,
   characterized in that
   the model variables for the air mass flow ($\dot{\hat{m}}_{DK}$) at the throttle valve (11) and for the residual gas mass flow ($\dot{\hat{m}}_{RG}$) at the exhaust gas recirculation valve (21) are described by throttle settings with the aid of the flow-through equation for ideal gases.

3. Method in accordance with claim 2,
   characterized in that
   the flow losses occurring at the throttling points (11, 21) are allowed for in each case by using a reduced flow cross-section ($\hat{A}_{RDK}$, $\hat{A}_{RRG}$) at the throttling points.

**4.** Method in accordance with claim 3,
characterized in that
the values for the reduced cross-sections ($\hat{A}_{RDK}$, $\hat{A}_{RRG}$) are established on the engine test stand on the basis of steady-state measurements depending on the degree of opening (AGRW) of the exhaust gas recirculation valve, and stored in maps (KF1, KF4) of a memory in the control device.

**5.** Method in accordance with claim 2,
characterized in that
in the representation of the model variables for the air mass flow ($\dot{\hat{m}}_{DK}$) at the throttle valve (11) and the model variable for the residual gas mass flow ($\dot{\hat{m}}_{RG}$) at the exhaust gas recirculation valve (21), a flow-through function ($\psi$) present in the flow-through equations is divided into single sections (i, j = 1 ...k) and these sections are approximated by straight sections, whereby for the values of the gradient ($m_{i,\,j}$), and for the absolute term ($n_{i,\,j}$) the particular straight sections, are determined as a function of the ratio of induction manifold pressure ($\hat{P}_S$) to ambient pressure ($\hat{P}_U$) or induction manifold pressure ($\hat{P}_S$) to exhaust gas back pressure ($\hat{P}_A$) and stored in a map in a memory in the control device.

**6.** Method in accordance with claim 1,
characterized in that
the model variable for the air mass flow into the cylinder ($\dot{\hat{m}}_{Zyl}$) is described as a linear function of the induction manifold pressure ($\hat{P}_S$) (equation 4.0) and gradient ($\gamma_1$) and the absolute term ($\gamma_0$) of the linear function is stipulated depending on at least one of the parameters, i.e. the rotational speed of the combustion engine, number of cylinders, induction manifold geometry, temperature of the air ($T_S$) in the induction manifold (10) or valve timing.

**7.** Method in accordance with claim 1,
characterized in that
the model variable for the residual gas mass flow in the cylinder ($\dot{\hat{m}}_{Zyl\_RG}$) is described as a linear function of the residual gas partial pressure ($\hat{P}_{RG}$) (equation 7.0) and the gradient ($\gamma_1$) of the linear function is stipulated depending on at least one of the parameters, i.e. rotational speed of combustion engine, number of cylinders, induction manifold geometry, temperature of the air ($T_S$) in the induction manifold (10) or valve timing.

**8.** Method in accordance with claim 6 or 7,
characterized in that
the parameters are determined by steady-state measurements on the engine test stand and stored in maps (KF2, KF3) in a memory in the control device.

**9.** Method in accordance with claim 1,
characterized in that
the load signal ($\dot{m}_{DK\_LMM}$, $P_{S\_SEN}$) measured by the load sensor (12, 13) is used in a model control circuit for correction and thus to adjust the air mass flow at the throttle valve ($\dot{\hat{m}}_{DK}$) and induction manifold pressure ($\hat{P}_S$) model variables, whereby the load signal ($\dot{m}_{DK\_LMM}$, $P_{S\_SEN}$) serves as a reference variable for the control circuit.

**10.** Method in accordance with claim 9,
characterized in that
the adjustment is carried out during steady-state and/or transient operation of the combustion engine and thus takes the response characteristic (equations 12.0 and 13.0) of the load sensor (12, 13) into account.

**11.** Method in accordance with claim 10,
characterized in that
the response characteristic of the load sensor (12, 13) is modelled by a first order system with a working point-dependent delay time (T1).

**12.** Method in accordance with claim 10,
characterized in that
a value of a reduced cross-section of the throttle valve ($\hat{A}_{RDK}$) is assigned to each measured value of the throttle valve degree of opening (DKW) and the adjustment of the air mass flow at the throttle valve ($\dot{\hat{m}}_{DK}$) model variable is achieved by correction of the reduced cross-section ($\hat{A}_{RDK}$) by a correction variable ($\Delta\hat{A}_{RDK}$) in such a way that the deviation between the reference variable ($\dot{m}_{DK\_LMM}$) and model variable ($\dot{\hat{m}}_{DK}$) is minimized.

13. Method in accordance with claim 10,
characterized in that
a value of a reduced cross-section of the exhaust gas recirculation valve ($\hat{A}_{RRG}$) is assigned to each measured value of the degree of opening (AGRW) of the exhaust gas recirculation valve (21) and the adjustment of the induction manifold pressure ($\hat{P}_S$) model variable is achieved by correcting the reduced cross-section ($\hat{A}_{RRG}$) by means of a correction variable ($\Delta\hat{A}_{RRG}$) in such a way that the deviation between the reference variable ($P_{S-SEN}$) and the model variable ($\hat{P}_S$) is minimized.

14. Method in accordance with claims 12 and 13,
characterized in that
the model variables are subjected to averaging (equations 12,1, 13.1) before the adjustment.

15. Method in accordance with claim 13,
characterized in that if the correction variable ($\Delta\hat{A}_{RRG}$) exceeds a stipulated threshold value in the positive direction, an increase in the exhaust gas back pressure ($\hat{P}_A$) model variable takes place and if the correction variable ($\Delta\hat{A}_{RRG}$) undershoots a negative, applicable threshold, a reduction in the exhaust gas back pressure ($\hat{P}_A$) model variable results.

16. Method in accordance with claim 1,
characterized in that
the air mass ($\hat{m}_{Zyl}$) flowing into the cylinder is calculated by the correlation

$$\hat{m}_{Zyl}[N] = \frac{T_A}{2} \bullet \left( \hat{\dot{m}}_{Zyl}[N-1] + \hat{\dot{m}}_{Zyl}[N] \right)$$

where

$T_A$      is the sampling interval or segment time

$\hat{m}_{Zyl}[N]$      is the model variable of the air mass flow during the actual sampling step or segment

$\dot{m}_{Zyl}[N-1]$      is the model variable of the air mass flow during the previous sampling step or segment

17. Method in accordance with claim 1,
characterized in that
the fresh gas mass ($\hat{m}_{Zyl}[N+H]$) flowing into the cylinders of the combustion engine is estimated for a specific prediction horizon (H), relative to the actual load acquisition at sampling time point (N) in the future, on the basis of the change over time of the partial pressures ($\hat{P}_{FG}$, $\hat{P}_{RG}$) model variables in the induction manifold (10).

**Revendications**

1. Procédé de détermination du débit massique d'air frais introduit dans le cylindre d'un moteur à combustion interne, comprenant :

- un collecteur d'admission (10) et un papillon des gaz (11) disposé dans celui-ci, ainsi qu'un dispositif capteur (14) détectant le degré d'ouverture (DKW) du papillon des gaz (19),
- un dispositif de recyclage de gaz d'échappement (19) comportant une valve de recyclage de gaz d'échappement (21), ainsi qu'un dispositif capteur (22) détectant le degré d'ouverture (AGRW) de la valve de recyclage de gaz d'échappement (21),
- un capteur (12 ; 13) produisant un signal de charge ($\dot{m}_{DK\_LMM}$ ; $P_{S\_SEN}$) du moteur à combustion interne,
- un dispositif de commande électronique qui calcule une durée d'injection de base à partir du signal de charge mesuré ($\dot{m}_{DK\_LMM}$ ; $P_{S\_SEN}$) et de la vitesse de rotation (n) du moteur à combustion interne,

caractérisé en ce que :

- les conditions dans le collecteur d'admission (10) sont simulées au moyen d'un modèle de remplissage de collecteur d'admission (équations 5.2, 8.1), au moins le degré d'ouverture (DKW) du papillon des gaz (11), le degré d'ouverture (AGRW) de la valve de recyclage de gaz d'échappement (21), la pression ambiante ($P_U$), la température de gaz d'échappement ($T_A$), la température ($T_S$) dans le collecteur d'admission et des paramètres représentant la position de valves étant utilisés en tant que grandeurs d'entrée du modèle,
- une grandeur de modèle correspondant au débit massique d'air ($\hat{\tilde{m}}_{DK}$) à l'endroit du papillon des gaz (11) et une grandeur de modèle correspondant au débit massique de gaz résiduels ($\hat{\tilde{m}}_{RC}$) à l'endroit de la valve de recyclage de gaz d'échappement (21) sont respectivement formées (équations 2.3 ; 3.0),
- une grandeur de modèle correspondant au débit massique d'air ($\hat{\tilde{m}}_{Zyl}$) dans le cylindre et une grandeur de modèle correspondant au débit massique de gaz résiduels ($\hat{\tilde{m}}_{Zyl\_RC}$) dans le cylindre sont respectivement formées en fonction de la pression de collecteur d'admission ($\hat{P}_S$) ou de la pression partielle de gaz résiduels ($\hat{P}_{RG}$) (équations 4.0 ; 7.0),
- à partir des grandeurs de modèle que sont le débit massique ($\hat{\tilde{m}}_{DK}$) à l'endroit du papillon des gaz, le débit massique de gaz résiduels ($\hat{\tilde{m}}_{RG}$) à l'endroit de la valve de recyclage de gaz d'échappement et le débit massique d'air ($\hat{\tilde{m}}_{Zyl}$) dans le cylindre, servant de grandeurs décisives pour la détermination de la charge effective du moteur à combustion interne, la pression de collecteur d'admission ($\hat{P}_S$) est calculée (équation 5.2),
- à partir des grandeurs de modèle que sont le débit massique de gaz résiduels ($\hat{\tilde{m}}_{RG}$) à l'endroit de la valve de recyclage de gaz d'échappement et le débit massique de gaz résiduels ($\hat{\tilde{m}}_{Zyl\_RC}$) dans le cylindre, la pression partielle de gaz résiduels ($\hat{P}_{RG}$) dans le collecteur d'admission est calculée (équation 8.1),
- à partir de la pression de collecteur d'admission ($\hat{P}_S$) et de la pression partielle de gaz résiduels ($\hat{P}_{RG}$), la pression partielle de gaz frais ($\hat{P}_{FG}$) est déterminée et
- à partir de la relation se présentant entre la pression partielle de gaz frais ($\hat{P}_{FG}$) et le débit massique d'air frais ($\hat{\tilde{m}}_{Zyl\_FG}$) dans le cylindre, le débit d'air ($\hat{m}_{Zyl\_FG}$) introduit dans le cylindre (17) est obtenu par intégration.

2. Procédé suivant la revendication 1, caractérisé en ce que les grandeurs de modèle correspondant au débit massique d'air ($\hat{\tilde{m}}_{DK}$) à l'endroit du papillon des gaz (11) et au débit massique de gaz résiduels ($\hat{\tilde{m}}_{RC}$) à l'endroit de la valve de recyclage de gaz d'échappement (21) sont décrites au moyen de l'équation d'écoulement des gaz parfaits à travers des emplacements d'étranglement.

3. Procédé suivant la revendication 2, caractérisé en ce qu'il est tenu compte de pertes de charge se présentant aux différents emplacements d'étranglement (11, 21) en utilisant des sections transversales d'écoulement réduites ($\hat{A}_{RDK}$, $\hat{A}_{RRG}$) respectives aux emplacements d'étranglement.

4. Procédé suivant la revendication 3, caractérisé en ce que les valeurs correspondant aux sections transversales réduites ($\hat{A}_{RDK}$, $\hat{A}_{RRG}$) sont déterminées sur banc d'essai de moteur à partir de mesures en régime permanent en fonction du degré d'ouverture (AGRW) de la valve de recyclage de gaz d'échappement et sont déposées dans des tables caractéristiques (KF1 ; KF4) d'une mémoire du dispositif de commande.

5. Procédé suivant la revendication 2, caractérisé en ce que, pour la représentation des grandeurs de modèle correspondant au débit massique d'air ($\hat{\tilde{m}}_{DK}$) à l'endroit du papillon des gaz (11) et de la grandeur de modèle correspondant au débit massique de gaz résiduels ($\hat{\tilde{m}}_{RC}$) à l'endroit de la valve de recyclage de gaz d'échappement (21), une fonction d'écoulement ($\psi$) se présentant dans les équations d'écoulement est divisée en différents segments (i, j = 1 . . . k) et ces segments font l'objet d'une approximation au moyen de segments de droite, les valeurs de la pente ($m_{i,j}$) et de l'abscisse à l'origine ($n_{i,j}$) des différents segments de droite étant déterminées sous forme de fonction respectivement du rapport de la pression de collecteur d'admission ($\hat{P}_S$) à la pression ambiante ($\hat{P}_U$) ou de la pression de collecteur d'admission ($\hat{P}_S$) à la contre-pression de gaz d'échappement ($\hat{P}_A$) et étant déposées dans une table caractéristique d'une mémoire du dispositif de commande.

6. Procédé suivant la revendication 1, caractérisé en ce que la grandeur de modèle correspondant au débit massique d'air ($\hat{\tilde{m}}_{Zyl}$) dans le cylindre est décrite (équation 4.0) sous forme d'une fonction linéaire de la pression de collecteur d'admission ($\hat{P}_S$), et la pente ($\gamma_1$) et l'abscisse à l'origine ($\gamma_0$) de la fonction linéaire sont déterminées en fonction d'au moins l'un des paramètres que sont la vitesse de rotation du moteur à combustion interne, le nombre de cylindres, les paramètres géométriques de collecteur d'admission, la température (TS) de l'air dans le collecteur d'admission (10) et les durées de commande d'injecteur.

7. Procédé suivant la revendication 1, caractérisé en ce que la grandeur de modèle correspondant au débit massique de gaz résiduels ($\hat{\tilde{m}}_{Zyl\_RC}$) dans le cylindre est décrite (équation 7.0) sous forme d'une fonction linéaire de la pression partielle de gaz résiduels ($\hat{P}_{RG}$), et la pente ($\gamma_1$) de la fonction linéaire sont déterminées en fonction d'au moins l'un des paramètres que sont la vitesse de rotation du moteur à combustion interne, le nombre de cylindres, les paramètres géométriques de collecteur d'admission, la température (TS) de l'air dans le collecteur d'admission (10) et les durées de commande d'injecteur.

8. Procédé suivant la revendication 6 ou 7, caractérisé en ce que les paramètres sont déterminés au moyen de mesures en régime permanent sur banc d'essai de moteur et sont déposés dans des tables caractéristiques (KF2, KF3) d'une mémoire du dispositif de commande.

9. Procédé suivant la revendication 1, caractérisé en ce que le signal de charge ($\dot{m}_{DK\_LMM}$; $P_{S\_SEN}$) mesuré par le capteur de charge (12 ; 13) sert, dans un circuit de régulation de modèle, à la correction et donc à l'égalisation des grandeurs de modèle que sont le débit massique d'air ($\hat{\dot{m}}_{Dt}$) à l'endroit du papillon des gaz et la pression de collecteur d'admission ($\hat{P}_S$), le signal de charge ($\dot{m}_{DK\_LMM}$; $P_{S\_SEN}$) servant de grandeur de pilotage du circuit de régulation.

10. Procédé suivant la revendication 9, caractérisé en ce que l'égalisation est effectuée en régime permanent et/ou en régime non permanent du moteur à combustion interne et il est alors tenu compte du comportement de transmission (équation 12.0 ; 13.0) du capteur de charge (12 ; ;13).

11. Procédé suivant la revendication 10, caractérisé en ce que le comportement de transmission du capteur de charge (12, 13) est modélisé au moyen d'un système du premier ordre comportant un retard (T1) indépendant du point de travail.

12. Procédé suivant la revendication 10, caractérisé en ce qu'une valeur respective d'une section transversale réduite ($\hat{A}_{RDK}$) du papillon des gaz est associée à chaque valeur mesurée du degré d'ouverture de papillon des gaz (DKW) et l'égalisation de la grandeur de modèle qu'est le débit massique d'air ($\hat{\dot{m}}_{Dt}$) à l'endroit du papillon des gaz s'effectue en corrigeant la section transversale réduite ($\hat{A}_{RDK}$) au moyen d'une grandeur de correction ($\Delta\hat{A}_{RDK}$), de façon que l'écart de régulation entre la grandeur de pilotage ($\dot{m}_{DK\_LMM}$) et la grandeur de modèle ($\hat{\dot{m}}_{Dk}$) soit rendu minimal.

13. Procédé suivant la revendication 10, caractérisé en ce qu'une valeur respective d'une section transversale réduite ($\hat{A}_{RRG}$) de la valve de recyclage de gaz d'échappement est associée à chaque valeur mesurée du degré d'ouverture (AGRW) de la valve de recyclage de gaz d'échappement (21) et l'égalisation de la grandeur de modèle qu'est la pression de collecteur d'admission ($\hat{P}_S$) s'effectue en corrigeant la section transversale réduite ($\hat{A}_{RRG}$) au moyen d'une grandeur de correction ($\Delta\hat{A}_{RRG}$), de façon que l'écart de régulation entre la grandeur de pilotage ($P_{S\_SEN}$) et la grandeur de modèle ($\hat{P}_S$) soit rendu minimal.

14. Procédé suivant la revendication 12 et 13, caractérisé en ce que les grandeurs de modèle sont soumises, avant l'égalisation, à une formation de moyenne (équation 12.1 ; 13.1).

15. Procédé suivant la revendication 13, caractérisé en ce que, lorsque la grandeur de correction ($\Delta\hat{A}_{RRG}$) dépasse vers le haut dans le sens positif une valeur de seuil préfixée, une augmentation de la grandeur de modèle qu'est la contre-pression de gaz d'échappement ($\hat{P}_A$) a lieu et, lorsque la grandeur de correction ($\Delta\hat{A}_{RRG}$) franchit vers le bas un seuil applicable négatif, une diminution de la grandeur de modèle qu'est la contre-pression de gaz d'échappement ($\hat{P}_A$) a lieu.

16. Procédé suivant la revendication 1, caractérisé en ce que le débit d'air ($\hat{\dot{m}}_{Zyl}$) introduit dans le cylindre est calculé au moyen de la relation

$$\hat{\dot{m}}_{Zyl}[N] = \frac{T_A}{2} \cdot \left( \hat{\dot{m}}_{Zyl}[N-1] + \hat{\dot{m}}_{Zyl}[N] \right)$$

dans laquelle

TA                est la durée d'analyse ou segment de temps,

$\hat{\dot{m}}_{Zyl}[N]$       est la grandeur de modèle du débit massique d'air pendant le pas d'analyse ou segment actuel,

$\dot{m}_{Zyl}[N\text{-}1]$       est la grandeur de modèle du débit massique d'air pendant le pas d'analyse ou segment passé.

**17.** Procédé suivant la revendication 1, caractérisé en ce que le débit de gaz frais ($\hat{m}_{Zyl}[N+H]$) introduit dans le cylindre du moteur à combustion interne est estimé, pour un horizon de prédiction (H) déterminé situé dans le futur par rapport à la détermination de charge actuelle à l'instant d'analyse (N), sur la base des variations dans le temps des grandeurs de modèle que sont les pressions partielles ($\hat{P}_{FG}$, $\hat{P}_{RG}$) dans le collecteur d'admission (10).

# FIG 1

EP 0 886 725 B1

# FIG 2

FIG 3

# FIG 4

EP 0 886 725 B1